# EUROPEAN PATENT APPLICATION

(11) **EP 1 574 141 A1**
(43) Date of publication of application: **14.09.2005**
(21) Application number: 03772359.0
(22) Date of filing: 17.11.2003
(51) Int. Cl.: A23L 2/12

(54) **JUICE CONCENTRATION METHOD**

(30) Priority: 21.11.2002 ES 200202682
(71) Applicant: Mendoza Turro, Agustin, 08002 Barcelona (ES)
(72) Inventor: Mendoza Turro, Agustin, 08002 Barcelona (ES)
(74) Representative: Manresa Val, Manuel
(86) International application number: PCT/ES2003/000582
(87) International publication number: WO 2004/045314

(57) **Abstract**

The invention relates to a juice concentration method which is intended for juices containing a significant quantity of sugars. The inventive method comprises a first phase in which the freshly-squeezed juice (1) is subjected to a clarification and ultrafiltration operation (2), thereby producing a clarified juice (4), and a second freeze concentration phase (8) in which the juice (4) is passed at least once through a liquid ice generator (5) in order to obtain, with each passage of the liquid, a concentration of ice microcrystals in a liquid solution (7) at the same temperature as the microcrystals. Said microcrystals are subsequently separated from the liquid by means of centrifugation (6) or vacuum, thereby producing microcrystals and a liquid (11).

## Description

This is a concentration method, for juice with a relevant amount of sugars, of the type that comprises a first phase in which the recently squeezed juice is subjected to a clearing and ultrafiltration operation, which results in a clarified juice, and which incorporates a second phase of concentration by freezing, in which the juice is passed at least once through liquid ice generator until, on each pass of the liquid, a microcrystal ice concentration in a liquid solution at the same temperature is obtained, after which, the said microcrystals are separated from the liquid by centrifugation or vacuum processing.

### BACKGROUND TO THE INVENTION

The use of reverse osmosis in methods for obtaining concentrated juices is well-known, since reverse osmosis enables the concentrated product to be separated from the water.

Thus, Spanish Patent No 554.055, which is currently in the public domain, already mentions the use of reverse osmosis for obtaining sterile, concentrated food juice, which provide improved taste and reduced acid content.

In addition, Spanish Patent No 8800243 (2014519) also described the use of reverse osmosis for obtaining juice and vegetable concentrates, with the particularity that the demineralised water, separated by the reverse osmosis operation, is subsequently recycled and used to wash the initial raw material.

Spanish Patent No 8900749 (2010144) is characterised in that before proceeding with the reverse osmosis, attention is paid to pH at the time of stirring.

European Patent 0404390 is characterised in that the pressure to which the reverse osmosis is subjected, is in the order of 6994 kPa, with a trans-membrane pressure of between 10442 kPa and 13889 kPa also exists.

European Patent No 0904702 is also known and is characterised by a procedure that generates pressure on the membranes and characterised in that the cited membrane can withstand pressures of up to 50 bar.

The inventor is also the owner of Spanish patent No 200100370, which consists of a procedure for obtaining juice by means of a liquid ice generator, an osmotic membrane and reverse osmosis.

In addition, the actual inventor is also owner of Spanish Patent No 200002093 (2166727), which protects a liquid ice generator.

### BRIEF DESCRIPTION OF THE PATENT APPLICATION

The purpose of this invention refers to a method for concentrating fruit juices, with a relevant amount of sugars, in which the quality and final characteristics of the juice in question are notably improved.

As previously stated, patent No 200100370 from the same inventor is known which is a method for juice concentration that employs at least four phases, with the one referring to reverse osmosis being especially relevant.

The said operation is necessary in fruit and vegetables with a low proportion of sugars, which makes it essential to pass the said juice through the osmotic membrane.

The inventor has noticed that the previously described method changes completely in juices with a higher sugar concentration.

To facilitate understanding, the description has been centred on grape / must and wine, although it could quite easily be any other fruit or vegetable, with the condition that it has a sufficiently high sugar concentration to make an osmotic membrane unnecessary.

For this reason, it has been possible to eliminate some of the initial phases and the possibility of that referring to fermentation of the product and in wine, in other words, already fermented must.

It comprises a first phase in which the just-squeezed juice is subjected to a clearing and ultrafiltration operation for the purpose of removing impurities producing a clarified juice.

It is subsequently passed through a second phase that consists of concentration through freezing, in which the mentioned juice is passed one or more times, depending on the amount of sugars in the juice, through a liquid ice generator until, on each pass of the liquid, a microcrystal ice concentration in a liquid solution at the same temperature is obtained.

Later, the said microcrystals are separated from the liquid by means of centrifugation or a vacuum, obtaining a final product that is concentrated juice.

Because of its characteristics, the final resultant product permits better conservation and because of this, it can be used subsequently to its production as a concentrate.

The fact of being able to intervene in the sugar concentration of a wine or must enables the wine's characteristics to be modified, which means it can be converted into a sweet or dry wine, or into any of the intermediate varieties (semi-dry, medium-sweet or semi-sweet).

It is also possible to accelerate the maturing process, since vintage or reserve wines require a high alcohol concentration so that by increasing the sugar content also increases the alcohol content and thus, will accelerate the maturing of the wine.

Similarly, passing through the ice generator, not only concentrates the sugar, but also the concentration of the various acids (tartaric, malic and citric) which encourages the fermentation of the must, since the proportions of these acids are increased in the fermentation.

In the past, boiling was employed to concentrate the juice, with the corresponding loss of aromas and degree of alcohol.

This method also resolves the problems that occur in a year of heavy rains, especially in the case of grapes, in which the important compounds inside the grape are diluted, producing a poor quality grape. With this invention, the quality of the grape can be re-established because it can be passed through the ice generator as many times as necessary, eliminating water until an adequate concentration is obtained.

Moreover, this method allows the wine or must to be conserved when there has been an over-production of the said product, this means that when there is a glut of one variety of grape this method may be used to obtain a final concentrate that can be conserved, for example, by freezing it, until subsequent years when the said variety is scarce, or simply until anytime it is needed.

Finally, it should be pointed out that in the case of conserving a wine, the said concentration will increase the degree of alcohol which, in the long run, will improve the wine's conservation.

### A BRIEF DESCRIPTION OF THE DRAWINGS

In order to facilitate the understanding of the preceding and following detailed descriptions, a sheet of drawings is included as a merely illustrative, non-limiting example:

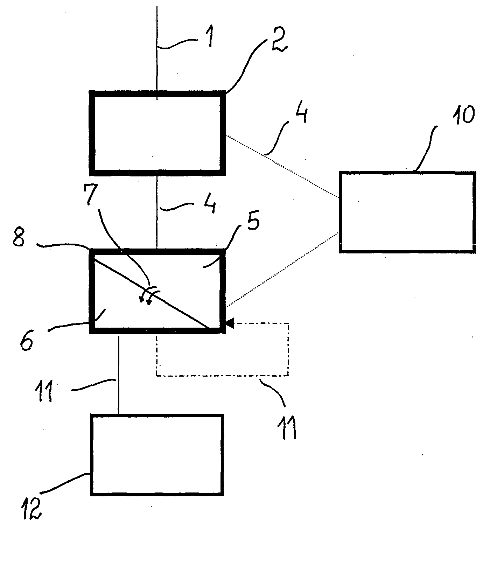

- Figure 1 is a block diagram showing the various phases of the actual process.

### A SPECIFIC EMBODIMENT EXAMPLE OF THE APPLIED-FOR PATENT

A description is given below of the method covered by the invention for obtaining juice concentrate, in which filtration, freezing and centrifugation operations take part on the one hand, achieving a simpler method with lower operational and energy costs and, which is more important, resulting in a product quality that is higher than that produced using current processes, since it does not employ any high-temperature heating process that degrades the components of the juice.

In this way, this method comprises a first phase in which the recently squeezed juice 1 is subjected to a clearing and ultrafiltration operation 2, preparing it for the following phase. The remaining pulp or solids obtained in this first phase can be incorporated into the final concentrate or used for other purposes.

A second concentration phase by freezing 8 in several stages, in which the juice 4 passes at least once through a liquid ice generator 5, until, on each pass of the liquid, a microcrystal ice concentration in a liquid solution 7 at the same temperature is obtained, after which the said microcrystals are separated from the liquid by means of centrifugation 6 or a vacuum, resulting in microcrystals and a liquid 11.

The freezing operation in the liquid ice generator, centrifugation and separation are repeated several times, depending on the product and its sugar concentration, although it is possible that a single pass through the liquid ice generator is all that is needed.

The concentrate that is separated by centrifugation will increase the initial concentration in such a way so that if it initially had 20 brix, with the second pass it could increase by approximately 20% and reach 24, about 29 with the third and 35 brix with the fourth etc.

The said various stages of freezing 8 are carried out at different temperatures in function of the concentrate brix degrees (which will mark the freezing point). This freezing will be performed at increasingly lower temperatures as the concentration in brix degrees increases.

The concentration operation by freezing 8 provides a series of advantages on various levels: in fact, working at temperatures close to 0°C prevents the degradation of compounds due to heat, achieving retention of volatile compounds, aromas, amino acids and vitamins that is much higher than when employing classic evaporation techniques.

In a phase subsequent to the second 12, the liquid resulting from separating the microcrystals 11 is fermented until a product is obtained with a certain degree of alcohol.

It is possible to start out from a phase 10, between the first 2 and second 8, in which the product is already fermented so that, when it enters the liquid ice generator 5, it is already a fermented product, for example wine and not simply a juice (must).

After having described the nature of the invention, it is stated that the juice concentration method can be obtained in the most convenient form, using the most suitable means and materials, with everything within the scope of the following claims.

## Claims

1. A method for concentrating juices, with relevant sugar contents, of the type comprising:
- A first phase in which the recently squeezed juice (1) is subjected to an operation of clearing and ultrafiltration (2) resulting in a clarified juice (4),
**characterised in that** it incorporates:
- a second phase of concentration by freezing (8), in which the juice (4) is passed at least once through liquid ice generator (5) until, on each pass of the liquid, a microcrystal ice concentration in a liquid solution (7) at the same temperature as the microcrystals is obtained, after which, the said microcrystals are separated from the liquid by centrifugation (6) or vacuum processing, resulting in microcrystals and liquid (11).

2. A method in accordance with claim 1, **characterised in that** the liquid (11) resulting from the separation of the microcrystals is passed, at least a second time, through the referred liquid ice generator.

3. A method in accordance with claim 1 or 2, **characterised in that** in a phase (12) subsequent to the second, the liquid (11) resulting from the separation of the microcrystals is fermented until a product is obtained with a certain degree of alcohol.

4. A method in accordance with claim 1 or 2, **characterised in that** between the first (2) and second (8) phases, there is a fermentation phase (8) of the clarified juice (11) resulting in a determined degree of alcohol.
